(19) Europäisches Patentamt / European Patent Office / Office européen des brevets

(11) **EP 4 563 664 B1**

(12) **EUROPÄISCHE PATENTSCHRIFT**

(45) Veröffentlichungstag und Bekanntmachung des Hinweises auf die Patenterteilung:
**19.11.2025 Patentblatt 2025/47**

(21) Anmeldenummer: **23212708.4**

(22) Anmeldetag: **28.11.2023**

(51) Internationale Patentklassifikation (IPC):
**C09D 5/00** (2006.01)

(52) Gemeinsame Patentklassifikation (CPC):
**C09D 5/00**

(54) **TÖNBASIS SOWIE GETÖNTE BESCHICHTUNGSZUSAMMENSETZUNG**

TIN BASE AND TINTED COATING COMPOSITION

BASE DE TONE ET COMPOSITION DE REVÊTEMENT TEINTÉE

(84) Benannte Vertragsstaaten:
**AL AT BE BG CH CY CZ DE DK EE ES FI FR GB GR HR HU IE IS IT LI LT LU LV MC ME MK MT NL NO PL PT RO RS SE SI SK SM TR**

(43) Veröffentlichungstag der Anmeldung:
**04.06.2025 Patentblatt 2025/23**

(73) Patentinhaber: **STO SE & Co. KGaA**
**79780 Stühlingen (DE)**

(72) Erfinder:
• **Hitzler, Martin**
**78244 Gottmadingen (DE)**
• **Fraunhoffer, Dominik**
**78166 Donaueschingen (DE)**
• **Fischer, Stefan**
**79879 Wutach (DE)**

(74) Vertreter: **Gottschalk, Matthias**
**Gottschalk Maiwald**
**Patentanwalts- und Rechtsanwalts- (Schweiz) GmbH**
**Florastrasse 14**
**8008 Zürich (CH)**

(56) Entgegenhaltungen:
EP-A1- 2 080 791    WO-A1-2016/161387
WO-A1-2023/215254    US-A1- 2008 148 995
US-A1- 2019 390 028    US-A1- 2019 390 029

**Beschreibung**

Die Erfindung betrifft eine Tönbasis für eine getönte Beschichtungszusammensetzung, insbesondere zur Ausbildung einer getönten Beschichtung auf einem Plattenwerkstoff. Darüber hinaus betrifft die Erfindung eine aus einer erfindungsgemäßen Tönbasis hergestellte getönte Beschichtungszusammensetzung.

Stand der Technik

Getönte Beschichtungszusammensetzungen werden im Baubereich zur farblichen Gestaltung von Oberflächen, beispielsweise von Plattenwerkstoffen, eingesetzt. Bei den Plattenwerkstoffen kann es sich insbesondere um Fassadenplatten, beispielsweise um Faserzementplatten handeln, die zur Ausbildung einer vorgehängten Fassade mit Hilfe einer Unterkonstruktion an der Außenwand eines Gebäudes befestigt werden. Die hierbei eingesetzten Plattenwerkstoffe bzw. Fassadenplatten werden werkseits bereits mit einer getönten Beschichtung versehen, so dass nach der Befestigung der Platten an der Außenwand eine nachträgliche Beschichtung, insbesondere ein Endanstrich, entfällt.

Zur Ausbildung einer getönten Beschichtung wird in der Regel eine getönte Beschichtungszusammensetzung verwendet, die eine Tönbasis sowie Farbpigmente, insbesondere eine Farbpigmentmischung, häufig in Form einer Pigmentpaste, zur Einstellung des Farbtons enthält. Je intensiver der über die Farbpigmente eingestellte Farbton ist, desto höher sind die Anforderungen hinsichtlich Farbtonstabilität und Glanzerhaltung der auf den Plattenwerkstoff aufgebrachten getönten Beschichtung.

Gerade bei Plattenwerkstoffen, die in vorgehängten Fassaden zum Einsatz gelangen, kann es durch Sonneneinstrahlung häufig zu unerwünschten Farbtonveränderungen kommen.

Durch Einwirkung elektromagnetischer Strahlung im Bereich von 350 nm bis 2500 nm, das heißt im Bereich von UV- bis IR-Strahlung, können einzelne Bestandteile einer getönten Beschichtung auf Dauer Schaden nehmen. Beispielsweise kann es zu einer Zerstörung der Farbpigmente und damit zu einem Pigmentversagen und/oder zu Schäden an der Bindemittelmatrix kommen. Die elektromagnetische Strahlung kann ferner dazu führen, dass bestimmte Bestandteile, wie beispielsweise Additive, photolytisch abgebaut werden.

Treten die Farbtonveränderungen im Wesentlichen flächig bzw. großflächig auf, ist dies üblicherweise auf den UV-Anteil des Sonnenlichts zurückzuführen. Treten die Farbtonveränderungen im Wesentlichen im Bereich der Unterkonstruktion auf, bildet diese Wärmebrücken aus. Hier macht sich dann der thermische Einfluss der elektromagnetischen Strahlung im NIR-Bereich, das heißt im nahen Infrarotbereich, bemerkbar. In beiden Fällen führt die elektromagnetische Strahlung zu einer dauerhaften Schädigung der getönten Beschichtung.

Um Schäden durch UV-Strahlung zu verhindern, können UV-Schutzmittel zugegeben werden. Diese sind jedoch sehr teuer und verlieren über die Zeit ihre Schutzwirkung. Um Schäden durch NIR-Strahlung zu verhindern, können NIR-reflektierende Farbpigmente zugegeben werden. Diese sind jedoch ebenfalls sehr teuer und die Farbauswahl ist begrenzt.

Ein weiterer Lösungsansatz sieht vor, die Pigmentvolumenkonzentration (PVK) zu verringern. Um eine niedrige PVK zu erreichen, muss ein hoher Anteil an Bindemittel, insbesondere Dispersionsbindemittel, eingesetzt werden. Dies ist weder aus wirtschaftlicher Sicht noch aus Sicht des Brandschutzes vertretbar. Zudem reicht dann in der Regel eine Farbschicht zur Ausbildung der getönten Beschichtung nicht aus, so dass die Beschichtungszusammensetzung in mehreren Schichten aufgebracht werden muss.

Aus der WO 2023/215254 A1 geht beispielhaft eine Beschichtungszusammensetzung hervor, die als Farbe verwendbar ist und ein organisches Polymerbindemittel mit einer Glasübergangstemperatur > 45°C sowie weitere Bestandteile enthält.

Die vorliegende Erfindung ist mit der Aufgabe befasst, die Nachteile des Stands der Technik zu beseitigen oder zumindest zu verringern. Zur Lösung der Aufgabe wird die Tönbasis mit den Merkmalen des Anspruchs 1 angegeben. Vorteilhafte Weiterbildungen der Erfindung sind den Unteransprüchen zu entnehmen. Darüber hinaus wird eine getönte Beschichtungszusammensetzung angegeben, die eine erfindungsgemäße Tönbasis enthält.

Offenbarung der Erfindung

Die vorgeschlagene Tönbasis für eine getönte Beschichtungszusammensetzung, insbesondere zur Ausbildung einer getönten Beschichtung auf einem Plattenwerkstoff, enthält:

- mindestens ein organisches Polymerbindemittel mit einer Glasübergangstemperatur (TG) nach EN ISO 16805 > 45°C, vorzugsweise > 50°C, weiterhin vorzugsweise > 55°C,
- mindestens einen Füllstoff aus Bariumsulfat und/oder Calciumcarbonat, aufweisend

    (i) eine mittlere Partikelgröße D50 nach DIN ISO 9276-1:2004-09 und ISO 9276-2:2014-05 von 1-20 $\mu$m,

vorzugsweise von 1-15 μm, weiterhin vorzugsweise von 2-10 μm, und

(ii) eine Ölzahl nach DIN EN ISO 787-5 von 1-22 g/100 g, vorzugsweise von 2-18 g/100 g, weiterhin vorzugsweise von 3-15 g/100 g,

- Wachs,
- übliche Additive und
- Wasser.

Erfindungswesentlich ist insbesondere der mindestens eine in der vorgeschlagenen Tönbasis enthaltene Füllstoff aus Bariumsulfat und/oder Calciumcarbonat. Denn aufgrund ihrer chemischen Zusammensetzung weisen beide Füllstoffe jeweils hohe Reflexionseigenschaften auf, die insbesondere im Bereich von 350 nm bis 2500 nm dazu führen, dass kaum elektromagnetische Strahlung aufgenommen, sondern nahezu vollständig reflektiert wird. Die Reflexionseigenschaften von Bariumsulfat, insbesondere im sichtbaren Lichtbereich, übersteigen sogar die von bekannten Weißpigmenten, wie beispielsweise Titandioxid oder Zinkoxid. Mit Calciumcarbonat verhält es sich ähnlich, wobei die Reflexionseigenschaften im UV- und kurzwelligen Bereich etwas schlechter sind als die von Bariumsulfat. Calciumcarbonat ist zudem leicht gelbstichig, so dass es - je nach Farbton - die Farbtonqualität beeinflussen kann. In diesem Fall wird Bariumsulfat als Füllstoff bevorzugt.

Bei der Auswahl des mindestens einen in der Tönbasis enthaltenen Füllstoffs kommt es jedoch nicht nur auf seine chemische Zusammensetzung an, sondern auch auf seine mittlere Partikelgröße und seine Ölzahl. Denn diese sind verantwortlich für die Farbtontiefe und die Farbtonqualität der späteren getönten Beschichtung. Die mittlere Partikelgröße und die Ölzahl beeinflussen sich dabei gegenseitig.

Die mittlere Partikelgröße D50, auch D50-Wert oder Medianwert genannt, gibt die mittlere Partikelgröße eines Füllstoffs an, so dass der Anteil der Partikel, die größer als der D50-Wert sind, gleich dem Anteil der Partikel ist, die kleiner als der D50-Wert sind. Die Bestimmung dieser Werte erfolgt bevorzugt nach DIN ISO 9276-1:2004-09 (Darstellung der Ergebnisse von Partikelgrößenanalysen - Teil 1: grafische Darstellung) und ISO 9276-2:2014-05 (Darstellung der Ergebnisse von Partikelgrößenanalysen - Teil 2: Berechnungen von mittleren Partikelgrößen/- durchmessern und Momenten aus Partikelgrößenverteilungen). Dabei kann der Mastersizer 3000 der Firma Malvern Instruments Limited als Instrument zur Größenbestimmung eingesetzt werden. In der Regel können diese Werte aber auch einfach einem technischen Datenblatt entnommen werden.

Der mindestens eine in der vorgeschlagenen Tönbasis enthaltene Füllstoff weist mit den genannten 1-20 μm einen vergleichsweise niedrigen D50-Wert und damit ein verbessertes (diffuses) Reflexionsvermögen auf.

Die Ölzahl nach DIN EN ISO 787-5 korreliert mit der spezifischen Oberfläche der einzelnen Füllstoffpartikel, die wiederum durch die Größe und die Morphologie der Füllstoffpartikel bestimmt wird. Füllstoffe aus sehr kleinen Partikeln, mit lamellaren Partikelformen und/oder porösen Oberflächen weisen eine größere spezifische Oberfläche und damit eine höhere Ölzahl auf als Füllstoffe aus größeren Partikeln, mit nodularer, das heißt rundlich-kompakter Partikelform. In der Lack- und Farbenindustrie ist die Ölzahl eine häufig verwendete Kenngröße von Pigmenten und/oder Füllstoffen. Denn sie stellt ein Maß für den Bindemittelbedarf des jeweiligen Pigments und/oder Füllstoffs dar. Je höher die Ölzahl ist, desto größer ist der Bindemittelbedarf.

Der mindestens eine in der vorgeschlagenen Tönbasis enthaltene Füllstoff weist mit den genannten 1-22 g/100 g (vorzugsweise 2-18 g/100 g, weiterhin vorzugsweise 3-15 g/100 g) eine vergleichsweise niedrige Ölzahl auf. Eine hohe Ölzahl dagegen würde den Bindemittelbedarf stark nach oben treiben und damit die Farbtontiefe der späteren getönten Beschichtung beeinträchtigen.

Ein Füllstoff, der eine niedrige Ölzahl bei zugleich niedrigem D50-Wert aufweisen soll, muss eine nodulare, kompakte Partikelform haben, wie dies beispielsweise bei Bariumsulfat der Fall ist. Darüber hinaus weist eine sehr hohe Rein-bzw. Rohdichte auf, die bei 4,3 g/cm³ liegt. Bei einem niedrigen D50-Wert kann daher Bariumsulfat noch mit einer sehr niedrigen Ölzahl aufwarten. Calciumcarbonat erreicht bei einem D50-Wert von 2-10 μm eine Ölzahl von 10-22 g/100 g. Andere Füllstoffe dagegen, wie beispielsweise calciniertes Kaolin, weisen bei einem D50-Wert von 5 μm bereits eine Ölzahl von über 55 g/100 g auf.

Die hohe Rein- bzw. Rohdichte von Bariumsulfat besitzt einen nicht unwesentlichen weiteren Vorteil. Denn sie führt - bei gleichem Gewichtsanteil an Füllstoff - zu einer verringerten Pigmentvolumenkonzentration (PVK).

Die PVK bezeichnet das Verhältnis des Volumens der enthaltenen Pigmente und Füllstoffe zum Gesamtvolumen an nichtflüchtigen Bestandteilen, in der Regel Pigmente, Füllstoffe und Bindemittel. Sie ist demnach eine wesentliche Größe zur Charakterisierung des Volumenverhältnisses von Pigment und Füllstoff zum Bindemittel. Je niedriger die PVK ist, desto höher ist in der Regel der Bindemittelanteil. Für die Bestimmung der PVK kann Rückgriff auf die DIN EN ISO 4618-1 genommen werden. Zur Berechnung der PVK kann die folgende Formel verwendet werden:

$$\text{PVK [\%]} = \left( \sum V_{\text{Pigmente}} + \sum V_{\text{Füllstoffe}} / \sum V_{\text{Pigmente}} + \sum V_{\text{Füllstoffe}} + \sum V_{\text{Bindemittel}} \right) \times 100$$

Die Pigmentvolumenkonzentration nach DIN EN ISO 4618-1 beträgt bei der vorgeschlagenen Tönbasis bevorzugt 5-40%, vorzugsweise 10-30%, weiterhin vorzugsweise 15-25%. Durch Einsatz eines Füllstoffs mit einer hohen Rein- bzw. Rohdichte kann eine entsprechend niedrige PVK auch ohne Erhöhung des Bindemittelanteils erreicht werden. Denn dadurch, dass ein schwererer Füllstoff weniger Volumen einnimmt, steigt der volumenbezogene Bindemittelanteil.

Neben Bariumsulfat und/oder Calciumcarbonat kann mindestens ein weiterer Füllstoff enthalten sein. In diesem Fall beträgt allerdings der Anteil des mindestens einen weiteren Füllstoffs weniger als 15 Gew.-%, vorzugsweise weniger als 10 Gew.-%, weiterhin vorzugsweise weniger als 5 Gew.-% bezogen auf das Gesamtgewicht der enthaltenen Füllstoffe.

Bevorzugt beträgt der Anteil an Füllstoffen insgesamt 10-40 Gew.-%, vorzugsweise 15-35 Gew.-%, weiterhin vorzugsweise 20-30 Gew.-%, bezogen auf das Gesamtgewicht der Ausgangsstoffe.

Einen Beitrag zur Lösung der eingangs genannten Aufgabe leistet ferner das mindestens eine in der Tönbasis enthaltene organische Polymerbindemittel. Denn dieses weist bei einer Glasübergangstemperatur TG > 45°C eine hohe UV-Beständigkeit sowie eine hohe Farbtonstabilität auf. Des Weiteren zeichnet sich das mindestens eine organische Polymerbindemittel durch eine gute Blockfestigkeit aus, und das trotz niedriger PVK bzw. hohem volumenbezogenen Bindemittelanteil.

Das mindestens eine in der Tönbasis enthaltene organische Polymerbindemittel ist vorzugsweise ein Polymerbindemittel auf Basis von Vinylacetat/EthylenCopolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate umfassend Homo- oder Copolymere von Acrylaten und/oder Methacrylaten, optional mit Acryl- und/oder Methacrylsäure als Comonomerbaustein. Geeignet sind insbesondere selbstvernetzende Core Shell-Polymerbindemittel auf Basis von Acrylaten, insbesondere Reinacrylaten. Besonders bevorzugt sind Homo- oder Copolymere auf Basis von Reinacrylaten und/oder auf Basis von Styrolacrylatcopolymeren als organisches Polymerbindemittel enthalten.

Bevorzugt beträgt der Anteil an organischem Polymerbindemittel 10-40 Gew.-%, vorzugsweise 15-35 Gew.-%, weiterhin vorzugsweise 20-30 Gew.-%, bezogen auf das Gesamtgewicht der Ausgangsstoffe.

Eine wichtige Funktion kommt auch dem mindestens einen in der Tönbasis enthaltenen Wachs zu. Denn es wirkt als Antiabsetzmittel, was insbesondere bei der Verwendung "schwerer" Füllstoffe einen Vorteil darstellt. Darüber hinaus erhöht das mindestens eine in der Tönbasis enthaltene Wachs die mechanische Festigkeit der späteren Beschichtung.

Ferner bevorzugt ist das mindestens eine Wachs ein Wachs fossiler Herkunft, ein halbsynthetisches Wachs und/oder ein synthetisches Wachs. In Frage kommt beispielsweise ein Paraffinwachs, ein Amidwachs, ein modifiziertes Montanwachs, ein Polypropylenwachs und/oder ein Polyethylenwachs, insbesondere ein High Density Polyethylenwachs (HDPE-Wachs). Die Verwendung eines unpolaren Wachses, wie beispielsweise Paraffinwachs oder HDPE-Wachs, erhöht die Wasserfestigkeit der späteren Beschichtung. Des Weiteren bevorzugt weist das mindestens eine in der Tönbasis enthaltene Wachs einen Schmelzbereich zwischen 110°C und 150°C, vorzugsweise zwischen 120°C und 145°C, weiterhin vorzugsweise zwischen 125°C und 140°C, auf. Der relativ hohe Schmelzbereich des Wachses erhöht die Blockfestigkeit ("Anti-Blocking"), wobei auch hier Paraffinwachs und/oder HDPE-Wachs bevorzugt eingesetzt werden.

Darüber hinaus kann das mindestens eine in der Tönbasis enthaltene Wachs als Mattierungsmittel dienen. Hierfür ist die mittlere Partikelgröße D50 des als Feststoff enthaltenen Wachses entscheidend. Bevorzugt beträgt daher die mittlere Partikelgröße D50 des mindestens einen Wachses 50-1000 nm, vorzugsweise 50-600 nm, weiterhin vorzugsweise 50-400 nm.

Ferner bevorzugt beträgt der Anteil an Wachs 0,5-3,0 Gew.-%, vorzugsweise 0,6-2,5 Gew.-%, weiterhin vorzugsweise 0,8-2,0 Gew.-%, bezogen auf das Gesamtgewicht der Ausgangsstoffe.

Des Weiteren bevorzugt ist ein amorphes Silikat, insbesondere amorphe Kieselsäure, als Mattierungsmittel enthalten. Da es sich bei amorpher Kieselsäure um einen schwer stabilisierbaren Feststoff handelt, erweist sich der Einsatz in Kombination mit dem mindestens einen Wachs als Vorteil, da dieser als Antiabsetzmittel wirkt. Die mittlere Partikelgröße D50 des amorphen Silikats beträgt 1-30 $\mu$m, vorzugsweise 4-25 $\mu$m, weiterhin vorzugsweise 6-20 $\mu$m.

Die darüber hinaus können in der Tönbasis rheologische Additive, Verdicker, Netz- und Dispergiermittel, Topf- und Filmkonservierungsmittel, Filmbildehilfsmittel, Biozide, Entschäumer, Entlüfter, Lichtschutzmittel, Radikalfänger, pH-Einsteller, Hydrophobierungsmittel und/oder Fasern als übliche Additive enthalten sein. Mit Hilfe der genannten üblichen Additive können die Verarbeitungseigenschaften der Zusammensetzung eingestellt werden. Als rheologische Additive werden bevorzugt Verdicker auf Basis von Polyacrylat und/oder Polyharnstoff, vorzugsweise eine Kombination hieraus, verwendet. Mit Hilfe dieser Additive konnten die Verlauf- und Ablaufeigenschaften der Tönbasis bzw. einer hieraus hergestellten getönten Beschichtungszusammensetzung deutlich verbessert werden. Als Entschäumer oder Entlüfter ist vorzugsweise ein Silikonöl enthaltender Entschäumer bzw. Entlüfter in der Tönbasis enthalten.

Bevorzugt beträgt der Anteil der in der Tönbasis enthaltenen Additive 1-10 Gew.-%, vorzugsweise 2-8 Gew.-%, weiterhin vorzugsweise 3-6 Gew.-%, bezogen auf das Gesamtgewicht der Ausgangsstoffe. Dies schließt auch - sofern enthalten - Mattierungsmittel, wie beispielsweise amorphes Silikat, mit ein. Der Wachsanteil ist hiervon jedoch ausgenommen, da dieser separat angegeben ist.

Ferner bevorzugt beträgt der Anteil an Wasser 20-70 Gew.-%, vorzugsweise 30-60 Gew.-%, weiterhin vorzugsweise 35-55 Gew.-%, bezogen auf das Gesamtgewicht der Ausgangsstoffe.

Um eine getönte Beschichtungszusammensetzung zu erhalten, muss der Tönbasis nur noch ein Farbpigment oder eine Farbpigmentmischung, beispielsweise in Form einer Pigmentpaste, zugegeben werden. Über die Zugabe, insbesondere über die Menge, des mindestens einen Farbpigments können dann der Farbton und die Farbintensität eingestellt werden.

In Weiterbildung der Erfindung wird daher zusätzlich eine getönte Beschichtungszusammensetzung vorgeschlagen, die insbesondere zur Ausbildung einer getönten Beschichtung auf einem Plattenwerkstoff geeignet ist. Die getönte Beschichtungszusammensetzung enthält eine erfindungsgemäße Tönbasis sowie mindestens ein Farbpigment, vorzugsweise eine Farbpigmentmischung, beispielsweise in Form einer Pigmentpaste. Über das mindestens eine enthaltene Farbpigment kann jeder beliebige Farbton eingestellt werden. Die Einarbeitung in die Tönbasis kann dabei insbesondere nach bekannten Mischmethoden erfolgen.

Weiterhin vorzugsweise beträgt der Anteil an Farbpigmenten maximal 12 Gew.-%, besser maximal 10 Gew.-% bezogen auf das Gesamtgewicht der Ausgangsstoffe der Beschichtungszusammensetzung. Auf diese Weise erhält man eine getönte Beschichtungszusammensetzung mit PVK-Werten zwischen 20-30%, selbst für intensive Farbtöne.

Des Weiteren muss eine aus einer erfindungsgemäßen Tönbasis und mindestens einem Farbpigment hergestellte Beschichtungszusammensetzung in nur einer Schicht aufgetragen werden, um eine getönte Beschichtung mit hoher Farbtiefe und Farbqualität herzustellen.

Nachfolgend wird ein konkretes Ausführungsbeispiel einer erfindungsgemäßen Tönbasis für eine getönte Beschichtungszusammensetzung angegeben.

Ausführungsbeispiel (Tönbasis)

| 25,0 | Gew.-% | organisches Polymerbindemittel auf Basis von Reinacrylat (Feststoff) |
|---|---|---|
| 25,0 | Gew.-% | Füllstoff aus Bariumsulfat (D50-Wert: 6 $\mu$m, Ölzahl: 10 g/100 g) |
| 1,5 | Gew.-% | Wachs (Feststoff) |
| 5,0 | Gew.-% | übliche Additive, insbesondere Alkalisteller, Netz- und Dispergiermittel, Entschäumer, Mattierungsmittel, Filmbildehilfsmittel, Konservierungsmittel, Verdicker, Verlaufsmittel u.a.) |
| 43,5 | Gew.-% | Wasser |
| 100 | Gew.-% | |

Zur Herstellung der Tönbasis werden alle Ausgangsstoffe homogen gemischt. Die derart hergestellte Tönbasis weist die folgenden technischen Werte auf:

| PVK: | ca. 22% |
|---|---|
| Festkörperanteil: | ca. 53% |
| Organischer Anteil: | ca. 50% |

Zur Ausbildung einer getönten Beschichtungszusammensetzung müssen der Tönbasis nur noch ein oder mehrere Farbpigmente zugegeben werden.

Nachfolgend wird ein Ausführungsbeispiel einer aus der oben angegebenen Tönbasis hergestellten getönten Beschichtungszusammensetzung angegeben, wobei es sich um eine Dispersionslackfarbe in der Farbe Anthrazit (RAL 7016) handelt. Hierzu wurden 100,0 Gew.-Teilen der Tönbasis 10,5 Gew.-Teile Pigmentpräparation in Pastenform, enthaltend Titandioxid, Eisenoxide sowie organische Pigmente (Gesamtanteil Pigmente 70 Gew.-% bezogen auf das Gesamtgewicht der Pigmentpräparation), zugegeben und homogenisiert. Die PVK der getönten Beschichtungszusammensetzung bzw. Dispersionslackfarbe betrug etwa 35%.

Für Freibewitterungsversuche wurde die getönte Beschichtungszusammensetzung bzw. Dispersionslackfarbe auf mehrere Platten aufgebracht, und zwar auf folgende Platten:

- eine Faserzementplatte,
- eine Verbundplatte bestehend aus zwei Aluminium-Deckblechen und einem mineralisch gefüllten Polymerkern ("Alucobond") sowie

-   eine Platte aus gepresster, hochverdichteter Steinwolle ("Rockpaneel").

Diese Platten wurden gewählt, da sie sich hinsichtlich Wärmeleitfähigkeit und Wärmespeicherkapazität unterscheiden. Ob sich diese Unterschiede im Versuch auswirken, sollte ebenfalls untersucht werden.

Anschließend, und zwar im März 2022, wurden die beschichteten Platten in Süddeutschland, das heißt in einer kühlgemäßigten Klimazone, der Freibewitterung ausgesetzt. Die beschichteten Platten wurden nach Süden hin ausgerichtet und um 45° gegenüber der Bodenebene geneigt angeordnet.

Als Referenzbeispiel wurde eine weitere getönte Beschichtungszusammensetzung hergestellt, in dessen Tönbasis ein Aluminiumhydroxid (D50 ~5$\mu$m, ÖZ 30g/100g) zu gleichen Gewichtsanteilen als Füllstoff Verwendung fand. Die PVK dieser getönten Beschichtungszusammensetzung betrug etwa 45%. Die als Referenzbeispiel dienende Beschichtungszusammensetzung wurde ebenfalls auf mehrere Platten aufgebracht, wobei die gleichen Plattenarten verwendet wurden. Diese wurden dann in Süddeutschland in gleicher Ausrichtung und Anordnung der Freibewitterung ausgesetzt.

Bei sämtlichen beschichteten Platten wurden nach 18 Monaten der Freibewitterung Farbtonabweichungen ($\Delta$E) und Glanzentwicklung (bei 85°) erfasst und mit dem jeweiligen Ausgangswert verglichen. Dabei wurden die folgenden Ergebnisse erzielt:

Farbtonabweichung ($\Delta$E) nach EN ISO 11664-4

|  |  | 18 Monate |
|---|---|---|
| Ausführungsbeispiel | Faserzement | 0,9 |
| Referenzbeispiel | | 3,8 |
| Ausführungsbeispiel | Alucobond | 0,8 |
| Referenzbeispiel | | 3,2 |
| Ausführungsbeispiel | Rockpanel | 0,8 |
| Referenzbeispiel | | 2,8 |

Glanzentwicklung (bei 85°) nach DIN EN ISO 2813 (gegenüber Ausgangswert)

|  |  | Ausgangswert | 18 Monate |
|---|---|---|---|
| Ausführungsbeispiel | Faserzement | 11,1 | 13,5 |
| Referenzbeispiel | | 11,2 | 9,3 |
| Ausführungsbeispiel | Alucobond | 7,2 | 11,6 |
| Referenzbeispiel | | 11,0 | 5,5 |
| Ausführungsbeispiel | Rockpanel | 9,8 | 13,4 |
| Referenzbeispiel | | 13,2 | 10,3 |

Ein $\Delta$E-Wert unter 1,0 entspricht einer sehr geringe Farbtonabweichung. Bei einem $\Delta$E-Wert unter 0,5 beispielsweise ist die Farbtonabweichung mit bloßem Auge nicht mehr erkennbar. Das heißt, dass bei den erfindungsgemäßen Ausführungsbeispielen die Farbtonabweichung minimal war. Bei den Referenzbeispielen mit $\Delta$E-Werten um 3,0 und darüber traten dagegen deutliche bis starke Farbtonabweichungen auf.

Auch im Hinblick auf die Glanzentwicklung zeigten die Platten, die mit einer getönten Beschichtungszusammensetzung gemäß dem Ausführungsbeispiel beschichtet waren, bessere Ergebnisse. Insbesondere konnte eine verbesserte Toleranz gegenüber Vermattung bzw. Glanzverlust beobachtet werden, und zwar unabhängig von der Art der darunterliegenden Platte.

**Patentansprüche**

1. Tönbasis für eine getönte Beschichtungszusammensetzung, insbesondere zur Ausbildung einer getönten Beschichtung auf einem Plattenwerkstoff, enthaltend

   - mindestens ein organisches Polymerbindemittel mit einer Glasübergangstemperatur (TG) nach EN ISO 16805 > 45°C, vorzugsweise > 50°C, weiterhin vorzugsweise > 55°C,
   - mindestens einen Füllstoff aus Bariumsulfat und/oder Calciumcarbonat, aufweisend

      (i) eine mittlere Partikelgröße D50 nach DIN ISO 9276-1:2004-09 und ISO 9276-2:2014-05 von 1-20 $\mu$m, vorzugsweise von 1-15 $\mu$m, weiterhin vorzugsweise von 2-10 $\mu$m, und
      (ii) eine Ölzahl nach DIN EN ISO 787-5 von 1-22 g/100 g, vorzugsweise von 2-18 g/100 g, weiterhin vorzugsweise von 3-15 g/100 g,

   - mindestens ein Wachs,
   - übliche Additive und
   - Wasser.

2. Tönbasis nach Anspruch 1,
   **dadurch gekennzeichnet, dass** die Pigmentvolumenkonzentration nach DIN EN ISO 4618-1 5-40%, vorzugsweise 10-30%, weiterhin vorzugsweise 15-25% beträgt.

3. Tönbasis nach Anspruch 1 oder 2,
   **dadurch gekennzeichnet, dass** mindestens ein weiterer Füllstoff enthalten ist, wobei der Anteil des mindestens einen weiteren Füllstoffs weniger als 15 Gew.-%, vorzugsweise weniger als 10 Gew.-%, weiterhin vorzugsweise weniger als 5 Gew.-% bezogen auf das Gesamtgewicht der in der Füllstoffkombination enthaltenen Füllstoffe beträgt.

4. Tönbasis nach einem der vorhergehenden Ansprüche,
   **dadurch gekennzeichnet, dass** der Anteil an Füllstoffen insgesamt 10-40 Gew.-%, vorzugsweise 15-35 Gew.-%, weiterhin vorzugsweise 20-30 Gew.-%, bezogen auf das Gesamtgewicht der Ausgangsstoffe beträgt.

5. Tönbasis nach einem der vorhergehenden Ansprüche,
   **dadurch gekennzeichnet, dass** das mindestens eine organische Polymerbindemittel ein Polymerbindemittel auf Basis von Vinylacetat/Ethylen-Copolymeren, Copolymeren auf Basis von Vinylaromaten, insbesondere Styrol, und Acrylaten und/oder Homo- oder Copolymeren auf Basis von Reinacrylaten, insbesondere auf Basis von Styrolacrylatcopolymeren, und/oder Reinacrylate, umfassend Homo- oder Copolymere von Acrylaten und/oder Methacrylaten, optional mit Acryl- und/oder Methacrylsäure als Comonomerbaustein, ist.

6. Tönbasis nach einem der vorhergehenden Ansprüche,
   **dadurch gekennzeichnet, dass** der Anteil an organischem Polymerbindemittel 10-40 Gew.-%, vorzugsweise 15-35 Gew.-%, weiterhin vorzugsweise 20-30 Gew.-%, bezogen auf das Gesamtgewicht der Ausgangsstoffe beträgt.

7. Tönbasis nach einem der vorhergehenden Ansprüche,
   **dadurch gekennzeichnet, dass** das mindestens eine Wachs ein Wachs fossiler Herkunft, ein halbsynthetisches Wachs und/oder ein synthetisches Wachs, beispielsweise ein Paraffinwachs, ein Amidwachs, ein modifiziertes Montanwachs, ein Polypropylenwachs und/oder ein Polyethylenwachs, insbesondere ein High Density Polyethylenwachs, ist und einen Schmelzbereich zwischen 110°C und 150°C, vorzugsweise zwischen 120°C und 145°C, weiterhin vorzugsweise zwischen 125°C und 140°C, aufweist.

8. Tönbasis nach einem der vorhergehenden Ansprüche,
   **dadurch gekennzeichnet, dass** die mittlere Partikelgröße D50 des mindestens einen Wachses 50-1000 nm, vorzugsweise 50-600 nm, weiterhin vorzugsweise 50-400 nm, beträgt.

9. Tönbasis nach einem der vorhergehenden Ansprüche,
   **dadurch gekennzeichnet, dass** der Anteil an Wachs 0,5-3,0 Gew.-%, vorzugsweise 0,6-2,5 Gew.-%, weiterhin vorzugsweise 0,8-2,0 Gew.-%, bezogen auf das Gesamtgewicht der Ausgangsstoffe beträgt.

10. Tönbasis nach einem der vorhergehenden Ansprüche,

**dadurch gekennzeichnet, dass** ein amorphes Silikat, insbesondere amorphe Kieselsäure, als Mattierungsmittel enthalten ist, wobei die mittlere Partikelgröße D50 des amorphen Silikats 1-30 $\mu$m, vorzugsweise 4-25 $\mu$m, weiterhin vorzugsweise 6-20 $\mu$m, beträgt.

11. Tönbasis nach einem der vorhergehenden Ansprüche,
**dadurch gekennzeichnet, dass** rheologische Additive, Verdicker, Netz- und Dispergiermittel, Topf- und Filmkonservierungsmittel, Filmbildehilfsmittel, Biozide, Entschäumer, Entlüfter, Lichtschutzmittel, Radikalfänger, pH-Einsteller, Hydrophobierungsmittel und/oder Fasern als übliche Additive enthalten sind.

12. Tönbasis nach einem der vorhergehenden Ansprüche,
**dadurch gekennzeichnet, dass** der Anteil an Additiven 1-10 Gew.-%, vorzugsweise 2-8 Gew.-%, weiterhin vorzugsweise 3-6 Gew.-%, bezogen auf das Gesamtgewicht der Ausgangsstoffe beträgt.

13. Tönbasis nach einem der vorhergehenden Ansprüche,
**dadurch gekennzeichnet, dass** der Anteil an Wasser 20-70 Gew.-%, vorzugsweise 30-60 Gew.-%, weiterhin vorzugsweise 35-55 Gew.-%, bezogen auf das Gesamtgewicht der Ausgangsstoffe beträgt.

14. Getönte Beschichtungszusammensetzung zur Ausbildung einer getönten Beschichtung auf einem Plattenwerkstoff enthaltend eine Tönbasis nach einem der vorhergehenden Ansprüche sowie mindestens ein Farbpigment, vorzugsweise eine Farbpigmentmischung, beispielsweise in Form einer Pigmentpaste, wobei weiterhin vorzugsweise der Anteil an Farbpigmenten maximal 12 Gew.-%, besonders bevorzugt maximal 10 Gew.-%, bezogen auf das Gesamtgewicht der Ausgangsstoffe der Beschichtungszusammensetzung beträgt.

**Claims**

1. A tint base for a tinted coating composition, in particular for forming a tinted coating on a panel material, containing

   - at least one organic polymer binder with a glass transition temperature (TG) according to EN ISO 16805 of > 45 °C, preferably > 50 °C, more preferably > 55 °C,
   - at least one filler produced from barium sulphate and/or calcium carbonate, having

     (i) a mean particle size D50 according to DIN ISO 9276-1:2004-09 and ISO 9276-2:2014-05 of 1-20 $\mu$m, preferably of 1-15 $\mu$m, more preferably of 2-10 $\mu$m, and
     (ii) an oil absorption value according to DIN EN ISO 787-5 of 1-22 g/100g, preferably of 2-18 g/100g, more preferably of 3-15 g/100g,

   - at least one wax,
   - conventional additives, and
   - water.

2. The tint base as claimed in claim 1, **characterized in that** the pigment volume concentration according to DIN EN ISO 4618-1 is 5-40%, preferably 10-30%, more preferably 15-25%.

3. The tint base as claimed in claim 1 or claim 2, **characterized in that** it contains at least one further filler, wherein the proportion of the at least one further filler is less than 15% by weight, preferably less than 10% by weight, more preferably less than 5% by weight, with respect to the total weight of the fillers contained in the filler combination.

4. The tint base as claimed in one of the preceding claims, **characterized in that** the proportion of fillers is a total of 10-40% by weight, preferably 15-35% by weight, more preferably 20-30% by weight, with respect to the total weight of the starting materials.

5. The tint base as claimed in one of the preceding claims, **characterized in that** the at least one organic polymer binder is a polymer binder on the basis of vinyl acetate/ethylene copolymers, copolymers on the basis of vinyl aromatics, in particular styrene, and acrylates, and/or homopolymers or copolymers on the basis of pure acrylates, in particular on the basis of styrene acrylate copolymers, and/or pure acrylates, comprising homopolymers or copolymers of acrylates and/or methacrylates, optionally with acrylic acid and/or methacrylic acid as the comonomeric unit.

6.  The tint base as claimed in one of the preceding claims, **characterized in that** the proportion of organic polymer binder is 10-40% by weight, preferably 15-35% by weight, more preferably 20-30% by weight, with respect to the total weight of the starting materials.

7.  The tint base as claimed in one of the preceding claims, **characterized in that** the at least one wax is a wax of fossil origin, a semi-synthetic wax and/or a synthetic wax, for example a paraffin wax, an amide wax, a modified montan wax, a polypropylene wax and/or a polyethylene wax, in particular a high density polyethylene wax, and has a melting range between 110°C and 150°C, preferably between 120°C and 145°C, more preferably between 125°C and 140°C.

8.  The tint base as claimed in one of the preceding claims, **characterized in that** the mean particle size D50 of the at least one wax is 50-1000 nm, preferably 50-600 nm, more preferably 50-400 nm.

9.  The tint base as claimed in one of the preceding claims, **characterized in that** the proportion of wax is 0.5-3.0% by weight, preferably 0.6-2.5% by weight, more preferably 0.8-2.0% by weight, with respect to the total weight of the starting materials.

10. The tint base as claimed in one of the preceding claims, **characterized in that** it contains an amorphous silicate, in particular amorphous silica, as a matting agent, wherein the mean particle size D50 of the amorphous silicate is 1-30 $\mu$m, preferably 4-25 $\mu$m, more preferably 6-20 $\mu$m.

11. The tint base as claimed in one of the preceding claims, **characterized in that** it contains rheological additives, thickening agents, wetting agents and dispersion agents, in-can preservatives and film preservatives, film-forming agents, biocides, defoaming agents, deaerators, light stabilizers, radical scavengers, pH adjusters, water-repellent agents and/or fibres as the conventional additives.

12. The tint base as claimed in one of the preceding claims, **characterized in that** the proportion of additives is 1-10% by weight, preferably 2-8% by weight, more preferably 3-6% by weight, with respect to the total weight of the starting materials.

13. The tint base as claimed in one of the preceding claims, **characterized in that** the proportion of water is 20-70% by weight, preferably 30-60% by weight, more preferably 35-55% by weight, with respect to the total weight of the starting materials.

14. A tinted coating composition for forming a tinted coating on a panel material containing a tint base as claimed in one of the preceding claims as well as at least one coloured pigment, preferably a coloured pigment mixture, for example in the form of a pigment paste, wherein more preferably, the proportion of coloured pigments is a maximum of 12% by weight, particularly preferably a maximum of 10% by weight, with respect to the total weight of the starting materials of the coating composition.

**Revendications**

1.  Base de teinture, destinée à une composition de revêtement teintée, destinée notamment à créer un revêtement teinté, contenant

    - au moins un liant polymère organique, faisant preuve d'une température de transition vitreuse (TG) selon la norme EN ISO 16805 > 45 °C, de préférence > 50°C, de préférence par ailleurs > 55 °C,
    - au moins un agent de charge en sulfate de baryum et / ou en carbonate de calcium, présentant

        (i) une taille moyenne des particules D50 selon les normes DIN ISO 9276-1 : 2004-09 et ISO 9276-2 : 2014-05 de 1 à 20 $\mu$m, de préférence de 1 à 15 $\mu$m, de préférence par ailleurs, de 2 à 10 $\mu$m et
        (ii) un indice d'absorption d'huile selon la norme DIN EN ISO 787-5 de 1 à 22 g/100 g, de préférence de 2 à 18 g/100 g, de préférence par ailleurs, de 3 à 15 g/100 g,

    - au moins une cire,
    - des additifs usuels et
    - de l'eau.

**2.** Base de teinture selon la revendication 1, **caractérisée en ce que** la concentration volumique du pigment selon la norme DIN EN ISO 4618-1 s'élève à de 5 à 40 %, de préférence à de 10 à 30 %, de préférence par ailleurs, à de 15 à 25 %.

**3.** Base de teinture selon la revendication 1 ou 2, **caractérisée en ce qu'**au moins un agent de charge supplémentaire est contenu, la part de l'au moins un agent de charge supplémentaire étant de moins de 15 % en poids, de préférence de moins de 10 % en poids, de préférence par ailleurs, de moins de 5 % en poids, rapportés au poids total des agents de charge contenus dans l'association d'agents de charge.

**4.** Base de teinture selon l'une quelconque des revendications précédentes, **caractérisée en ce que** la part des agents de charges s'élève au total à de 10 à 40 % en poids, de préférence à de 15 à 35 % en poids, de préférence par ailleurs, à de 20 à 30 % en poids, rapportés au poids total des matières de départ.

**5.** Base de teinture selon l'une quelconque des revendications précédentes, **caractérisée en ce que** l'au moins un liant polymère organique est un liant polymère à base de copolymères d'acétate de vinyle / d'éthylène, de copolymères à base de composés vinylaromatiques, notamment de styrènes et d'acrylates et / ou d'homopolymères ou de copolymères à base d'acryliques purs, notamment à base de copolymères de styrène-acrylates et / ou à base d'acryliques purs, comprenant des homopolymères ou des copolymères d'acrylates et / ou de méthacrylates, en option avec un acide acrylique et / ou méthacrylique en tant que constituant comonomère.

**6.** Base de teinture selon l'une quelconque des revendications précédentes, **caractérisée en ce que** la part de liant polymère organique s'élève à de 10 à 40 % en poids, de préférence à de 15 à 35 % en poids, de préférence par ailleurs, à de 20 à 30 % en poids, rapportés au poids total des matières de départ.

**7.** Base de teinture selon l'une quelconque des revendications précédentes, **caractérisée en ce que** l'au moins une cire est une cire d'origine fossile, une cire semi-synthétique et / ou une cire synthétique, par exemple une cire de paraffine, une cire d'amide, une cire de Montant modifiée, une cire de polypropylène et / ou une cire de polyéthylène, notamment une cire de polyéthylène haute densité et fait preuve d'un intervalle de point de fusion compris entre 110 °C et 150 °C, de préférence entre 120 °C et 145 °C, de préférence par ailleurs, entre 125 °C et 140 °C.

**8.** Base de teinture selon l'une quelconque des revendications précédentes, **caractérisée en ce que** la taille moyenne des particules D50 de l'au moins une cire s'élève à de 50 à 1000 nm, de préférence à de 50 à 600 nm, de préférence par ailleurs, à de 50 à 400 nm.

**9.** Base de teinture selon l'une quelconque des revendications précédentes, **caractérisée en ce que** la part de cire s'élève à de 0,5 à 3,0 % en poids, de préférence à de 0,6 à 2,5 % en poids, de préférence par ailleurs, à de 0,8 à 2,0 % en poids, rapportés au poids total des matières de départ.

**10.** Base de teinture selon l'une quelconque des revendications précédentes, **caractérisée en ce qu'**un silicate amorphe, notamment un acide silicique amorphe est contenu en tant qu'agent matifiant, la taille moyenne des particules D50 du silicate amorphe s'élevant à de 1 à 30 $\mu$m, de préférence à de 4 à 25 um, de préférence par ailleurs à de 6 à 20 $\mu$m.

**11.** Base de teinture selon l'une quelconque des revendications précédentes, **caractérisée en ce que** des additifs rhéologiques, des épaississants, des agents réticulants et des agents dispersants, des agents conservateurs pour produits en boîte et des agents conservateurs de films, des auxiliaires filmogènes, des biocides, des agents antimousse, des désaérateurs, des agents photoprotecteurs, des capteurs de radicaux, des régulateurs de pH, des agents conférant le caractère hydrophobe et / ou des fibres sont contenus en tant qu'additifs usuels.

**12.** Base de teinture selon l'une quelconque des revendications précédentes, **caractérisée en ce que** la part d'additifs s'élève à de 1 à 10 % en poids, de préférence à de 2 à 8 % en poids, de préférence par ailleurs à de 3 à 6 % en poids, rapportés au poids total des matières de départ.

**13.** Base de teinture selon l'une quelconque des revendications précédentes, **caractérisé en ce que** la part d'eau s'élève à de 20 à 70 % en poids, de préférence à de 30 à 60 % en poids, de préférence par ailleurs, à de 35 à 55 % en poids, rapportés au poids total des matières de départ.

**14.** Composition de revêtement teintée, destinée à créer un revêtement teinte sur un matériau de panneaux, contenant une base de teinture selon l'une quelconque des revendications précédentes, ainsi qu'au moins un pigment colorant, de préférence un mélange de pigments colorants, par exemple sous la forme d'une pâte pigmentaire, de préférence par ailleurs, la part de pigments colorant s'élevant au maximum à 12 % en poids, de manière particulièrement préférentielle, au maximum à 10 % en poids, rapportés au poids total des matières de départ de la composition de revêtement.

**IN DER BESCHREIBUNG AUFGEFÜHRTE DOKUMENTE**

*Diese Liste der vom Anmelder aufgeführten Dokumente wurde ausschließlich zur Information des Lesers aufgenommen und ist nicht Bestandteil des europäischen Patentdokumentes. Sie wurde mit größter Sorgfalt zusammengestellt; das EPA übernimmt jedoch keinerlei Haftung für etwaige Fehler oder Auslassungen.*

**In der Beschreibung aufgeführte Patentdokumente**

- WO 2023215254 A1